# EUROPEAN PATENT APPLICATION

(11) **EP 4 667 393 A1**
(43) Date of publication of application: **24.12.2025**
(21) Application number: 25181970.2
(22) Date of filing: 11.06.2025
(51) Int. Cl.: B65G 27/04, B07C 1/00

(54) **VIBRATORY FEEDING SYSTEM OF A SOLID MATERIAL IN FLUID FORM**

(30) Priority: 18.06.2024 IT 202400013984
(71) Applicant: Cavart SpA, 24020 Gorle (IT)
(72) Inventor: ONORI, Francesco, 24020 GORLE (IT); ONORI, Giulio, 24020 GORLE (IT)
(74) Representative: Tirloni, Bartolomeo

(57) **Abstract**

Feeding system (1) of a solid material in fluid form comprising a vibrating tray (2) having a feeding surface (11) for feeding said solid material in fluid form along a feeding direction (5), a plurality of flow separation elements (6) arranged on the feeding surface (11) spatially separated from each other to realize one or more passage channels (7) for the solid material in fluid form, wherein each flow separation element (6) comprises a wedge-shaped front portion (8) facing against the feeding direction (5) and comprising a first and a second channeling face facing respective distinct passage channels (7) and wherein each of the first and second channeling face is inclined with respect to the feeding surface (11) by a respective acute angle.

## Description

### Technical field of the invention

The present invention relates to a feeding system of a solid material in fluid form.

### Technical State of the Art

In the industrial context, systems are known for feeding solid material in fluid form to a collection bay in which the material is prepared for further processing and/or treatments.

### Summary of the invention

The expression "solid material in fluid form" (or "flowable material") means a material having a solid state of aggregation but capable of exhibiting properties typical of a fluid, preferably a liquid, such as the ability to flow when subjected to gravity, pressure, vibrations. Examples of solid materials in fluid form can be powders, granular materials in general, such as seeds and/or grains, salt, pellets, quantities of fragments of solid materials (e.g. glass cullet), etc.

The term "glass cullet" refers to the final product leaving glass collection and recycling centres and typically containing a predominant percentage of glass fragments (coloured and/or transparent) obtained from bottles and/or containers in general processed and crushed, and at least a fraction of unwanted polluting material (typically between 10 and 30 ppm).

By "digital image" is generally meant a set of data, typically contained in a computer file, in which each tuple of coordinates (typically each pair of coordinates) of a finite set (usually in a two-dimensional or three-dimensional matrix form, i.e., N rows by M columns, and in the three-dimensional case, by C channels) of tuples of spatial coordinates (each tuple corresponding to a pixel) is associated with a corresponding set of numerical values (which can represent quantities of various types). For example, in monochromatic images (such as grayscale images), this set of values consists of a single value within a finite scale (typically 256 levels or tones), this value being representative, for instance, of the brightness (or intensity) level of the respective tuple of spatial coordinates when displayed. Another example is color images, in which the set of values represents the brightness level of multiple colors, or channels, typically the primary colors (for example, in RGB encoding: red, green, and blue; while in CMYK encoding: cyan, magenta, yellow, and black). The term "image" does not necessarily imply the actual visualization thereof. In the present description and claims, any reference to a specific "digital image" (e.g., the digital image of the detection surface acquired) more generally includes any digital image obtainable through one or more digital processing operations on said specific digital image (such as filtering, equalization, smoothing, binarization, thresholding, morphological transformations (e.g., opening), derivative or integral calculations, etc.). With the terms "perpendicular" and "orthogonal" it is meant respectively a substantial perpendicularity and a substantial orthogonality between two elements, comprising both the ideal case wherein such elements are arranged one with respect to the other so as to form a right angle, and more frequent cases wherein the two elements are arranged one with respect to the other so as to form an angle which deviates from the right angle (e.g. comprised in an interval of ± 15°, more preferably ± 10°, with respect to the right angle) but nevertheless in a negligible or not relevant way for the purposes of the functioning of the present solution.

With the term "parallel" it is meant a substantial parallelism between two elements, including both the ideal case where the elements are arranged to form a zero-degree angle with each other, and more common cases where the two elements form an angle that deviates from zero (e.g., within a range of ±15°, more preferably ±10°, relative to zero degrees) but in any case is negligible or irrelevant for the functioning of the present solution.

In the aforementioned context, the Applicant has felt the need to feed the solid material in fluid form to the collecting bay in a desired manner, more precisely to distribute the material on a horizontal surface (in movement with respect to the feeding system, for example realized by a conveyor belt) of the aforementioned collecting bay in a manner such that the individual granules or fragments of solid material in fluid form are spatially distanced from one another when on the horizontal surface.

This is particularly useful when it is necessary to subject the individual granules or fragments of the material to a respective process when in the collecting bay, for example a process that involves the acquisition of digital images of the surface together with the material arranged on it, with the objective of distinctly displaying in the acquired digital image each granule or fragment (and therefore necessitating that such granules or fragments are not superimposed on one another, not even partially).

Such spatially separated distribution must also be achieved quickly and automatically.

The Applicant has therefore faced the problem of feeding a solid material in fluid form to a collecting bay in a desired manner, for example in a manner such that the individual elements (e.g. granules or fragments) are distributed in a spatially distanced manner from one another when in the collecting bay, and automatically and rapidly.

According to the Applicant, the aforementioned problem is solved by a feeding system for solid material in a fluid form in accordance with the appended claims and/or having one or more of the following features.

According to one aspect the invention relates to a feeding system of a solid material in fluid form.

Preferably said system comprises a vibrating tray.

Preferably said vibrating tray has a feeding surface for feeding said solid material in fluid form along a feeding direction.

Preferably said vibrating tray comprises a loading mouth.

Preferably said vibrating tray comprises an unloading mouth. Preferably said unloading mouth is arranged downstream of said loading mouth with respect to said feeding direction.

Preferably said system comprises a plurality of flow separation elements. Preferably said flow separation elements are arranged on said feeding surface in correspondence of said unloading mouth. Preferably said flow separation elements are spatially separated from each other to realize one or more passage channels for said solid material in fluid form. Preferably each flow separation element comprises a front portion. Preferably said front portion is wedge-shaped. Preferably said front portion is facing against said feeding direction (i.e., the tapering direction of said front portion is opposite to said feeding direction.). Preferably said front portion comprises a first and a second channeling face. Preferably said first and second channeling face of each flow separation element face respective distinct passage channels.

Preferably each of said first and second channeling face is inclined with respect to said feeding surface by a respective acute angle.

According to the Applicant, the feeding system as described above allows the solid material to be fed, downstream of the feeding system, for example onto a horizontal surface of a collection bay, in a desired, rapid, and automatic manner.

The Applicant has in fact found, after multiple experimental tests, that the presence of a plurality of flow separation elements, together with the specific shape of their respective front portions as described above, enables the solid material in fluid form to be delivered, thanks to the vibratory motion of the tray, onto the horizontal surface of the collection bay in such a way that the individual elements (granules and/or fragments) of the solid material are spatially separated from one another on the surface.

Without wishing to be bound by any specific theory, the Applicant believes that the presence of the flow separation elements first produces a division effect on the material flow, splitting it into a plurality of sub-flows, one sub-flow for each passage channel, as well as an initial deceleration effect on the overall flow. Furthermore, thanks to the wedge-shaped front portions of the flow-separation elements, i.e., portions with increasing width along the direction of the passage channel (thus progressively narrowing the channel cross-section to a minimum), and to the two inclined channelling faces as previously described, it is possible to induce, on each material sub-flow, an additional effect of deceleration and temporal dispersion of the advancement of individual elements within the sub-flow, which therefore reach the collection bay in a temporally staggered manner (with statistical variation), allowing the above-mentioned spatial separation to be obtained (e.g. under conditions of relative motion between the feeding system and the horizontal surface of the collection bay).

Moreover, the channelling faces inclined with respect to the feeding surface at an acute angle facilitate the above-mentioned effect without, however, sharply blocking the material sub-flow, thereby eliminating the risk that a fragment of anomalous size (e.g., potentially present in the solid material due to the statistical distribution of particle size) might become lodged in the passage channel, obstructing it. Thanks to the inclined faces, in fact, each passage channel has at least one inlet portion with both lateral walls non-vertical, thus allowing even larger fragments to pass through (possibly lifting off from the feeding surface and sliding in contact with the channelling faces).

The present invention, in one or more of the aforementioned aspects, may present one or more of the following preferred features.

Preferably said inclination acute angle of each of said first and second channelling faces is between 10° and 80°, more preferably between 20° and 60°, even more preferably between 25° and 55°, for example approximately 45°. In this way, the aforementioned effects produced by the front portion are enhanced.

Preferably said feeding system comprises a vibration-generating device configured to impart vibrations to said tray.

Preferably said feeding surface is inclined with respect to a horizontal plane along the feeding direction by an angle greater than or equal to 5°, more preferably greater than or equal to 10° and less than or equal to 60°, even more preferably less than or equal to 55°. In this way, the advancement of the material along the feeding direction is further facilitated.

Preferably each flow separation element comprises a respective plane of symmetry containing said feeding direction. In this way the aforesaid fragment-dilution effects are further enhanced.

Preferably each flow separation element has main development parallel to said feeding direction. In this way the channelling of the solid material in fluid form along the passage channels is made efficient.

Preferably each first and second channeling face is directly contiguous to said feeding surface. In other words, the channelling faces extend directly from the feeding surface. In this way, the channelling of the solid material is further simplified.

Preferably each flow separation element has, in top view, width along a direction perpendicular to said feeding direction having a first (monotonotonically) increasing trend from a front end of said front portion to a maximum.

Preferably each flow separation element has, in top view, width along a direction perpendicular to said feeding direction having a second (monotonically) decreasing trend, more preferably consecutive to said first trend, proceeding along said feeding direction. In other words, the cross-section of the passage channel narrows to a minimum aperture at the point corresponding to the maximum width of the separation elements, and then widens again (thus creating a sort of hourglass-shaped passage channel). In this way, thanks to the constriction of the passage channel cross-section and its subsequent widening, the aforementioned effects of deceleration and temporal dilution of fragment flow are further enhanced. Specifically, the widening of the channel after the minimum passage point allows, for example, freer movement of the fragment that has passed this narrowest point, facilitating its spatial separation from other fragments upstream of this point, especially when compared to a design with parallel channel walls and a constant channel cross-section equal to the minimum immediately after that point.

Preferably each flow separation element comprises a rear portion, more preferably contiguous to said front portion.

Preferably said maximum of said first trend of said width is located in correspondence of an interface between said front portion and said rear portion. In this way the separation element is highly rational.

Preferably said rear portion comprises a first and a second vertical face. In this way, each material component is effectively guided along the unloading mouth.

Preferably a respective angle, taken on said feeding surface (i.e., in top view), between said feeding direction and respectively each first and second channeling face is greater than or equal to 10°, more preferably greater than or equal to 15° and/or less than or equal to 40°, more preferably less than or equal to 35°.

Preferably a respective angle, taken on said feeding surface (i.e., in top view), between said feeding direction and respectively each of said first and second vertical face is greater than or equal to 5°, more preferably greater than or equal to 10° and/or less than or equal to 35°, more preferably less than or equal to 30°.

The aforementioned in-plan inclination angles of the channelling faces and the vertical faces improve the effectiveness of the channelling of the material along the passage channel and/or the aforementioned effects of deceleration and temporal dilution of the fragments.

Preferably said rear portion further comprises a first and a second rear face mutual incident along a first incidence edge. Preferably said first incidence edge is arranged substantially parallel to said feeding surface and substantially parallel to said feeding direction. According to the Applicant, the sloping rear faces with the incident edge as described above facilitate the sliding of the fragments downstream of the front portion (i.e., after having passed the minimum point).

Preferably said first and second rear face respectively connect with continuity said first and second channeling face with respectively said first and second vertical face. In this way, the flow separation element features a continuous and compact structure. Preferably each flow separation element has in top view a substantially rhomboidal shape truncated in correspondence of an outlet edge of said unloading mouth. In this way, the flow separation element is structurally simple.

Preferably each passage channel is delimited by (solely) said first channelling face, said first vertical face and said first rear face of a first flow separation element and by (solely) said second channelling face), said second vertical face and said second rear face of a second flow separation element directly adjacent to said first flow separation element. In this way, the aforementioned effects resulting from the presence of the flow separation elements are improved, while at the same time balancing structural complexity. Preferably all said flow separation elements are arranged in succession between each other along a transverse direction orthogonal to said feeding direction, and preferably aligned with each other along said transverse direction. In this way, the homogeneous feeding of the solid material in fluid form is improved.

Preferably said flow separation elements are all equal to each other. In this way, the implementation is simplified.

Preferably said feeding system comprises a protrusion disposed on said feeding surface upstream of said plurality of flow separation elements with respect to said feeding direction. Preferably said protrusion comprises an inclined plane with an inclination disposed accordingly with said feeding direction (i.e., with the height of the protrusion increasing along the feeding direction). In this way, the flow of solid material is further slowed down before reaching the flow separation elements, further enhancing the effects achieved by said flow separation elements.

Preferably a distance between front ends of front portions of directly adjacent flow separation elements is greater than or equal to 5 times a minimum distance between said directly adjacent flow separation elements, more preferably greater than or equal to 6 times said minimum distance, and/or less than or equal to 10 times said minimum distance, more preferably less than or equal to 9 times said minimum distance. Preferably a length of said front portion along said feeding direction is greater than or equal to 12 times said minimum distance, more preferably greater than or equal to 13 times said minimum distance, and/or less than or equal to 18 times said minimum distance, more preferably less than 17 times said minimum distance.

Preferably a length of said rear portion along said feeding direction is greater than or equal to 5 times said minimum distance, more preferably greater than or equal to 6, and/or less than or equal to 10 times said minimum distance, more preferably less than or equal to 9 times said minimum distance.

Preferably said width of each flow separation element in correspondence of said maximum is greater than or equal to 4 times said minimum distance, more preferably greater than or equal to 5 times said minimum distance, and/or less than or equal to 9 times said minimum distance, more preferably less than or equal to 8 times said minimum distance.

Preferably a maximum height of each flow separation element is greater than or equal to 2 times said minimum distance, more preferably greater than or equal to 3 times said minimum distance, and/or less than or equal to 6 times said minimum distance, more preferably less than or equal to 5 times said minimum distance.

The Applicant has found that one or more of the above-mentioned ratios for the geometric dimensions of the flow separation elements are particularly advantageous for the purposes of the present invention.

According to another aspect the invention relates to a quality control system for a mixture of a first and a second solid material in fluid form.

Preferably said control system comprises the feeding system according to the previous invention.

Preferably said control system comprises a detection surface (e.g., said surface of the collection bay) disposed downstream of said feeding system with respect to said feeding direction.

Preferably said control system comprises an acquisition device structured to acquire a digital image of said detection surface.

Preferably said control system comprises a processing unit.

Preferably said processing unit is programmed for commanding said feeding system for spreading a sample of said mixture on said detection surface.

Preferably said processing unit is programmed for commanding said acquisition device for acquiring said digital image of said detection surface on which said sample of said mixture is spread.

Preferably said processing unit is programmed for determining a quality of said mixture as a function of said digital image.

### Brief description of the figures

Figure 1 shows a perspective view of a feeding system according to the present invention;
Figure 2a shows a top view of the system of Figure 1;
Figure 2b shows a front view of the system of Figure 1;

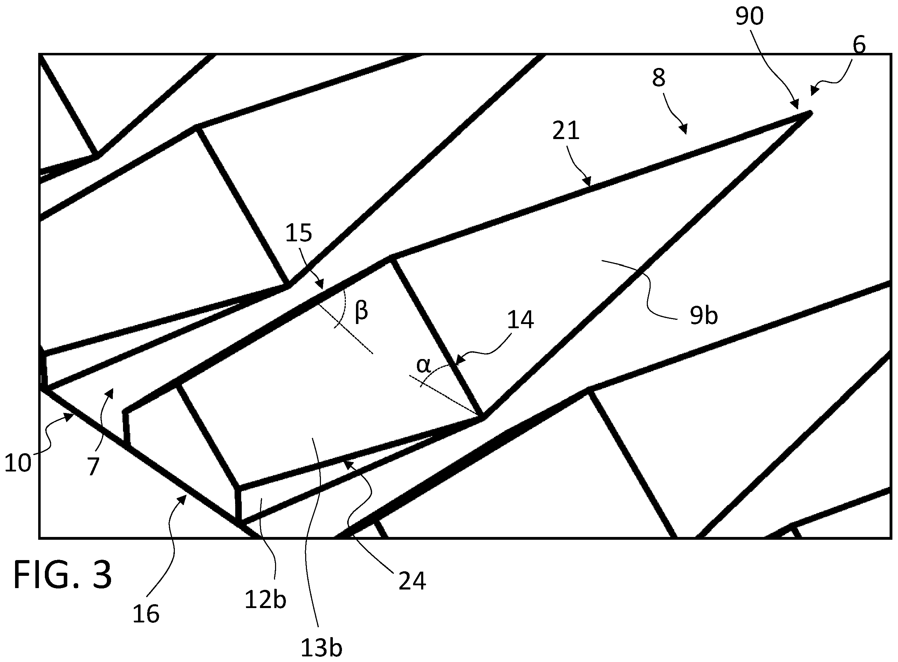

Figures 3, 4, and 5 each show a detail of the system of Figure 1;
Figure 6 shows a quality control system according to the present invention.

### Detailed description of some embodiments of the invention

The features and advantages of the present invention will become further apparent from the following detailed description of some exemplary, non-limiting embodiments of the invention, with reference to the accompanying figures.

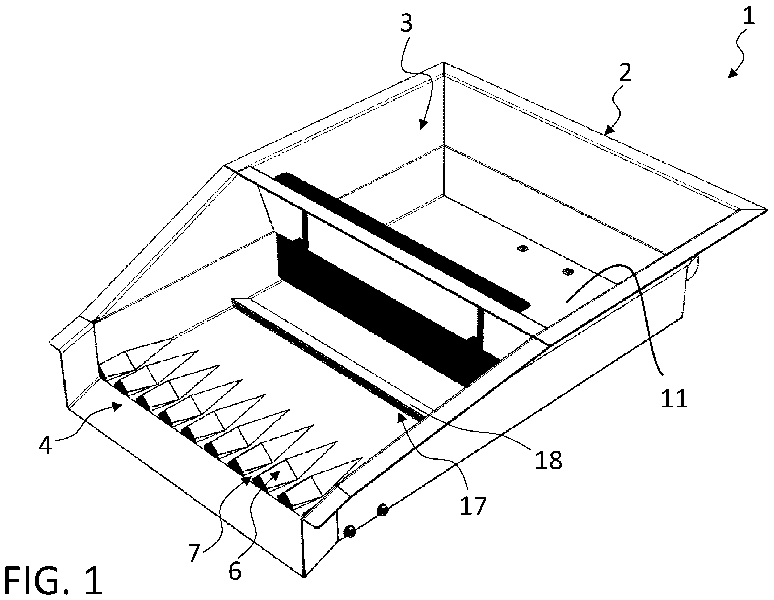

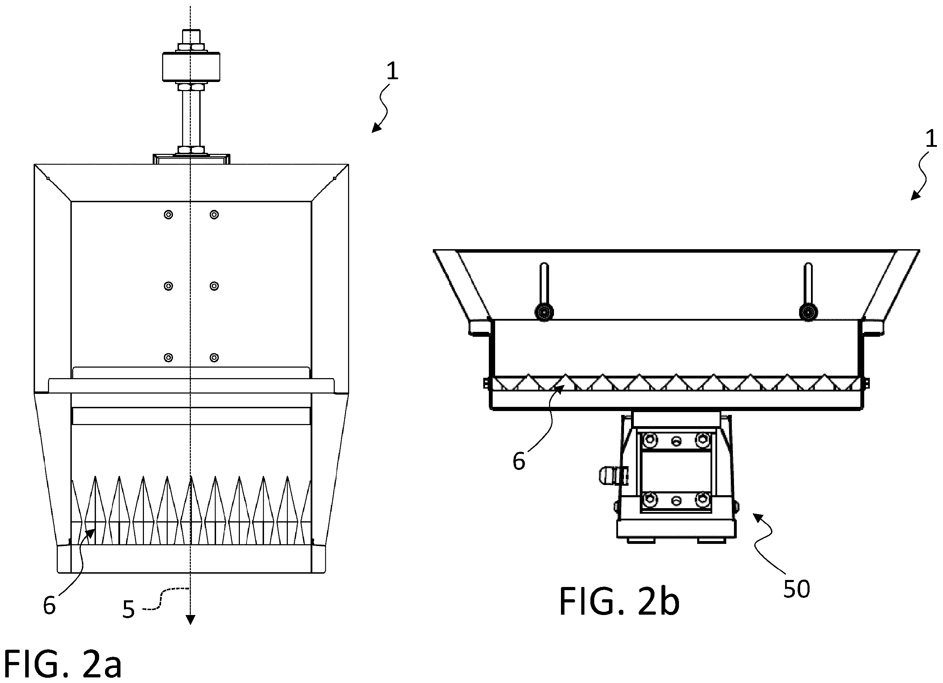

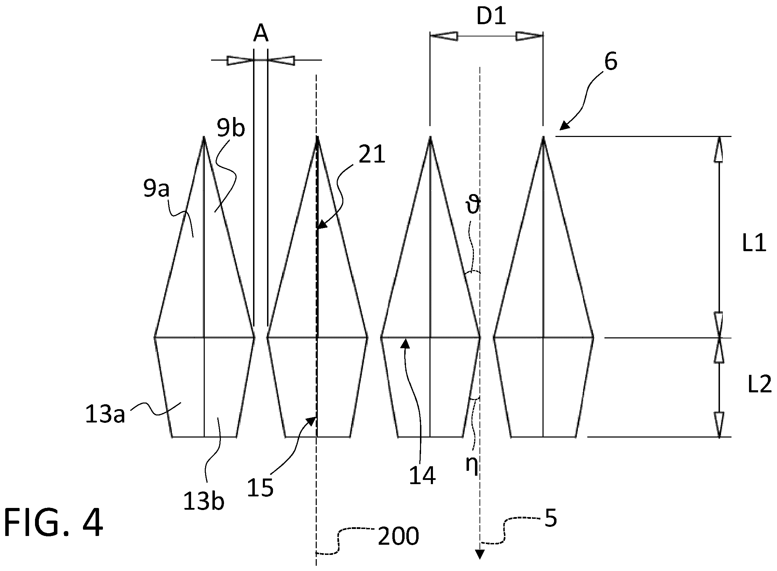

Figure 1 exemplarily shows a feeding system 1 according to the present invention. Exemplarily the system 1 comprises a vibrating tray 2 having a feeding surface 11 for feeding solid material in fluid form (not shown) along a feeding direction 5 (Figures 2a and 4).

Exemplarily, the tray 2 extends mainly along the plane containing the feeding surface 11. Exemplarily the vibrating tray 2 comprises a loading mouth 3 for introducing the material into the feeding system 1, and an unloading mouth 4 arranged downstream of the loading mouth 3 with respect to the feeding direction 5. Exemplarily the unloading mouth 4 comprises an outlet edge 10 located at a perimeter side of the feeding surface 11, from which the solid material in fluid form is discharged.

Exemplarily the system 1 comprises a vibration-generating device 50 (Figure 2b), for example of a known type, configured to set the tray 2 into vibration. Exemplarily the vibration-generating device 50 generates vibrations at a frequency greater than or equal to 30 Hz and less than or equal to 100 Hz, for example approximately 50 Hz. Exemplarily the system 1 comprises a plurality of flow separation elements 6 arranged on the feeding surface 11 at the unloading outlet 4, spatially separated from each other to realize one or more passage channels 7 for the solid material in fluid form.

Exemplarily each flow separation element 6 comprises a respective plane of symmetry 200 containing the feeding direction 5 (or a direction parallel thereto).

Exemplarily, each flow separation element 6 has main development parallel to the feeding direction 5.

Exemplarily all the flow separation elements 6 are arranged in succession between each other along a transverse direction orthogonal to the feeding direction 5 and aligned with each other along the transverse direction.

Exemplarily the flow separation elements 6 are all equal to each other. As a result, the passage channels 7 are also all equal to each other.

Exemplarily each flow separation element 6 comprises a wedge-shaped front portion 8 facing against the feeding direction 5, meaning that the tapering direction of the front portion 8 is opposite to the feeding direction 5. Exemplarily the front portion 8 comprises a first 9a and a second channeling face 9b, facing respective distinct passage channel 7. Exemplarily each of the first 9a and second channeling face 9b is inclined with respect to the feeding surface 11 by a respective acute angle, exemplarily of about 30°. Exemplarily the first 9a and second channeling face 9b intersect along a second incidence edge 21 which is, in top view, parallel to the feeding direction 5.

Exemplarily each of the first 9a and second channeling faces 9b is directly contiguous to the feeding surface 11.

Exemplarily a height of the front portion 8 with respect to the feeding surface 11 (proceeding along the second incidence edge 21) increases monotonically from a front end 90 of the front portion 8 (where said height is zero) up to a maximum height H1 in the feeding direction 5.

Exemplarily a respective angle θ, taken on the feeding surface 11, between the feeding direction 5 and respectively each first 9a and second channeling face 9b is equal to approximately 20°.

Exemplarily each flow separation element 6 comprises a rear portion 16 contiguous to the front portion 8.

Exemplarily the rear portion 16 comprises a first 12a and a second vertical face 12b. Exemplarily each of the first 12a and second vertical face 12b is perpendicular to the feeding surface 11.

Exemplarily a respective angle η, taken on the feeding surface 11, between the feeding direction 5 and respectively each first 12a and second vertical face 12b is equal to approximately 15°.

Exemplarily the rear portion 16 further comprises a first 13a and a second rear face 13b, mutual incident along a first incidence edge 15.

Exemplarily the first incidence edge 15 is arranged parallel to the feeding surface 11 and parallel to the feeding direction 5.

Exemplarily the first 13a and the second rear face 13b respectively connect with continuity the first 9a and second channelling face 9b to the first 12a and second vertical face 12b, forming, exemplarily, a first 14 and a second joining edge 24 with the respective channelling face 9a, 9b, and the respective vertical face 12a, 12b.

Exemplarily, the first joining edge 14 is, in top view, perpendicular to the feeding direction 5. Exemplarily each second joining edge 24 is, in top view, inclined with respect to the feeding direction 5 by the aforementioned respective angle η.

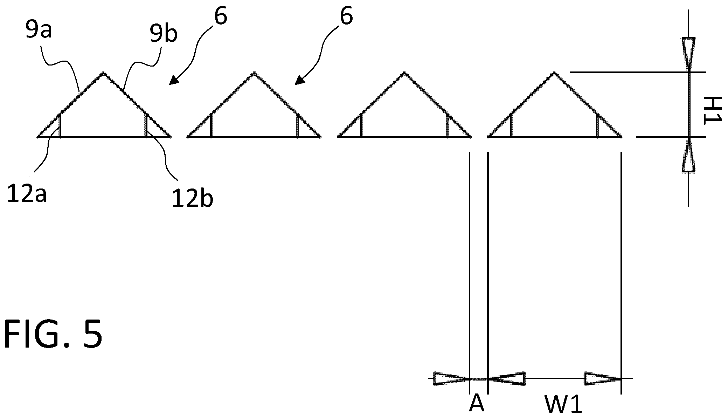

Exemplarily each flow separation element 6 has, in top view, width along a direction perpendicular to the feed direction 5 having a first monotonically increasing trend from the front end 90 of the front portion 8 to a maximum W1 (Figure 5), and subsequently a second monotonically decreasing trend, consecutive to the first, proceeding along the feed direction 5.

In other words, the cross-section of the passage channel 7 exemplarily narrows down to a minimum width, which corresponds to a minimum distance A between directly adjacent flow separation elements 6, at the point where the width of the flow separation elements 6 reaches its maximum W1, and then widens again, thereby creating a substantially hourglass-shaped form for each channel.

Exemplarily the maximum W1 of the first trend of the width is located in correspondence of an interface between the front portion 8 and the rear portion 16.

Exemplarily each flow separation element 6 has in top view a substantially rhomboidal shape truncated (along the major diagonal) in correspondence of an outlet edge 10 of said unloading mouth. Exemplarily the rhomboidal shape has as major diagonal the sum of the first incidence edge 15 and the second incidence edge 21, and as minor diagonal the first junction edge 14.

Exemplarily each passage channel 7 is delimited solely by the first channelling face 9a, the first vertical face 12a, and the first rear face 13a of a first flow separation element 6, and solely by the second channelling face 9b, the second vertical face 12b, and the second rear face 13b of a second flow separation element 6 directly adjacent to the first flow separation element 6.

Exemplarily the feeding system 1 comprises a protrusion 17 disposed on the feeding surface 11 upstream of the plurality of flow separation elements 6 with respect to the feeding direction 5.

Exemplarily the protrusion 17 comprises an inclined plane 18 with an inclination oriented consistently with the feeding direction 5.

Exemplarily a distance D1 between the front ends 90 of the front portions 8 of directly adjacent flow separation elements 6 is approximately 7 times the minimum distance A between the flow separation elements 6.

Exemplarily a length L1 of the front portion 8 along the feeding direction 5 is equal to about 15 times the minimum distance A and a length L2 of the rear portion 16 along the feeding direction 5 equal to about 7 times the minimum distance A.

Exemplarily the maximum width W1 of each flow separation element is equal to about 6 times the minimum distance A and the maximum height H1 of each flow separation element 6 is equal to about 4 times the minimum distance A.

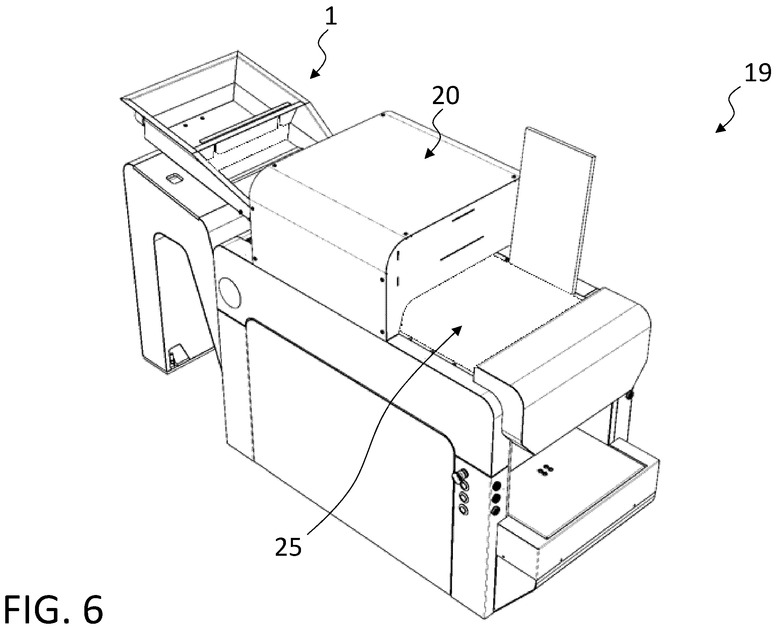

With reference to Figure 6, it shows a quality control system 19 for a mixture (not shown) of a first and a second solid material in fluid form according to an aspect of the present invention.

Exemplarily the control system 19 comprises the feeding system 1 and a detection surface 25 disposed downstream of the feeding system 1 with respect to the feeding direction 5. Exemplarily the feeding surface 11 is inclined, with respect to the detection surface 25, at an angle of approximately 30°.

Exemplarily the feeding system 1 feeds a sample of the mixture of solid material in fluid form onto the detection surface 25 in such a way that the fragments of first and second solid material in fluid form present in the sample are spatially separated from each other when on the detection surface 25.

Exemplarily the control system 19 further comprises an acquisition device (not shown, for example housed in a casing 20 of the control system) structures to acquire a digital image of the detection surface 25 with the sample scattered over it.

Exemplarily the control system 19 comprises a processing unit programmed for:
- commanding the feeding system 1 for spreading a sample of the mixture on the detection surface 25;
- commanding the acquisition device 20 for acquiring the digital image of the detection surface 25 on which the sample of the mixture is spread;
- determining a quality of the mixture as a function of the digital image, more precisely as a function of brightness values of the pixels in the image.

With "brightness value" is meant a (numerical) value representative of the reflectivity and/or diffusivity and/or color of a physical point corresponding to the image pixel.

Advantageously the control system 19 is configured for inspecting samples of glass scrap containing fragments of glass and fragments of at least one contaminant, such as paper, metal, ceramic, glass-ceramic, lead glass, plastic, organic material, etc., through digital processing of the acquired digital image.

To this end, the feeding system 1 according to the present invention is particularly advantageous for distributing the fragments of the first and second material in the sample so that all fragments are spatially separated from each other, ensuring that each fragment in the digital image is fully visible and recognizable, and is not hidden by other fragments (which could otherwise result in non-detection or incorrect detection of the hidden fragment).

This is particularly beneficial when the digital image processing includes object recognition and classification algorithms applied to digital images, such as algorithms implemented by a convolutional neural network, which requires each fragment to be clearly visible in the image.

## Claims

1. Feeding system (1) of a solid material in fluid form, said system (1) comprising:
- a vibrating tray (2) having a feeding surface (11) for feeding said solid material in fluid form along a feeding direction (5), said vibrating tray (2) comprising a loading mouth (3) and an unloading mouth (4) arranged downstream of said loading mouth (3) with respect to said feeding direction (5);
- a plurality of flow separation elements (6) arranged on said feeding surface (11) in correspondence of said unloading mouth (4) spatially separated from each other to realize one or more passage channels (7) for said solid material in fluid form,
wherein each flow separation element (6) comprises a wedge-shaped front portion (8) facing against said feeding direction (5) and comprising a first (9a) and a second channeling face (9b), wherein said first (9a) and second channeling face (9b) of each flow separation element (6) face respective distinct passage channels (7) and wherein each of said first (9a) and second channeling face (9b) is inclined with respect to said feeding surface (11) by a respective acute angle (α, β).

2. Feeding system (1) according to claim 1, wherein each flow separation element (6) comprises a respective plane of symmetry containing said feeding direction (5), wherein each flow separation element (6) has main development parallel to said feeding direction (5), and wherein each first and second channeling face is directly contiguous to said feeding surface (11).

3. Feeding system (1) according to any one of the previous claims, wherein each flow separation element (6) has, in top view, width along a direction perpendicular to said feeding direction (5) having a first increasing trend from a front end of said front portion (8) to a maximum (W1) and a second decreasing trend, consecutive to said first trend, proceeding along said feeding direction (5).

4. Feeding system (1) according to claim 3, wherein each flow separation element (6) comprises a rear portion (16) contiguous to said front portion (8), wherein said maximum (W1) of said first trend of said width is located in correspondence of an interface (14) between said front portion (8) and said rear portion (16), wherein said rear portion (16) comprises a first (12a) and a second vertical face (12b), wherein a respective angle (θ), taken on said feeding surface (11), between said feeding direction (5) and respectively each first (9a) and second channeling face (9b) is greater than or equal to 10° and less than or equal to 40°, and wherein a respective angle (η), taken on said feeding surface (11), between said feeding direction (5) and respectively each of said first (12a) and second vertical face (12b) is greater than or equal to 5° and less than or equal to 35°.

5. Feeding system (1) according to claim 4, wherein said rear portion (16) further comprises a first (13a) and a second rear face (13b) mutual incident along a first incidence edge (15), wherein said first (13a) and second rear face (13b) respectively connect with continuity said first (9a) and second channeling face (9b) with respectively said first (12a) and second vertical face (12b), wherein said first incidence edge (15) is arranged substantially parallel to said feeding surface (11) and substantially parallel to said feeding direction (5).

6. Feeding system (1) according to any one of the previous claims, wherein each flow separation element (6) has in top view a substantially rhomboidal shape truncated in correspondence of an outlet edge (10) of said unloading mouth (4).

7. Feeding system (1) according to claim 5, wherein each passage channel (7) is delimited by said first channelling face (9a), said first vertical face (12a), and said first rear face (13a) of a first flow separation element (6) and by said second channelling face (9b), said second vertical face (12b), and said second rear face (13b) of a second flow separation element (6) directly adjacent to said first flow separation element (6).

8. Feeding system (1) according to any one of the previous claims, wherein all said flow separation elements (6) are arranged in succession between each other along a transverse direction orthogonal to said feeding direction (5) and aligned with each other along said transverse direction, wherein said flow separation elements (6) are all equal to each other, wherein said feeding system (1) comprises a protrusion (17) disposed on said feeding surface (11) upstream of said plurality of flow separation elements (6) with respect to said feeding direction (5), and wherein said protrusion (17) comprises an inclined plane (18) with an inclination disposed accordingly with said feeding direction (5).

9. Feeding system (1) according to claim 4, wherein a distance (D1) between front ends (80) of front portions (8) of directly adjacent flow separation elements (6) is greater than or equal to 5 times a minimum distance (A) between said directly adjacent flow separation elements (6), and less than or equal to 10 times said minimum distance (A), wherein a length (L1) of said front portion (8) along said feeding direction (5) is greater than or equal to 12 times said minimum distance (A), and less than or equal to 18 times said minimum distance (A), wherein a length (L2) of said rear portion (16) along said feeding direction (5) is greater than or equal to 5 times said minimum distance (A), and less than or equal to 10 times said minimum distance (A), wherein said width of each flow separation element (6) in correspondence of said maximum (W1) is greater than or equal to 5 times said minimum distance (A), and less than or equal to 8 times said minimum distance (A), and wherein a maximum height (H1) of each flow separation element (6) is greater than or equal to 3 times said minimum distance (A) and less than or equal to 5 times said minimum distance (A).

10. Quality control system (19) for a mixture of a first and a second solid material in fluid form, said quality control system (19) comprising:
- said feeding system (1) according to any one of the previous claims;
- a detection surface (25) disposed downstream of said feeding system (1) with respect to said feeding direction (5);
- an acquisition device (20) structured to acquire a digital image of said detection surface (25);
- a processing unit programmed for:
- commanding said feeding system (1) for spreading a sample of said mixture on said detection surface (25);
- commanding said acquisition device (20) for acquiring said digital image of said detection surface (25) on which said sample of said mixture is spread;
- determining a quality of said mixture as a function of said digital image.
